# EUROPEAN PATENT SPECIFICATION

(11) **EP 1 669 189 B1**
(45) Date of publication and mention of the grant of the patent: **25.11.2009**
(21) Application number: 03818635.9
(22) Date of filing: 08.09.2003
(51) Int. Cl.: B32B 15/08, B32B 27/36, B32B 7/02, B32B 1/00

(54) **RESIN-COATED METAL PLATE AND DRAWN CAN USING THE SAME**
MIT HARZ BESCHICHTETES METALLBLECH UND DIESES VERWENDENDE TIEFGEZOGENE DOSE
PLAQUE METALLIQUE ENDUITE DE RESINE ET BOITE ETIREE UTILISANT LADITE PLAQUE METALLIQUE

(43) Date of publication of application: 14.06.2006
(73) Proprietor: TOYO SEIKAN KAISHA, LTD., Tokyo 100-8522 (JP)
(72) Inventor: KURODA, Akio, c/o Toyo Seikan Kaisha, Ltd., Yokohama-shi, Kanagawa 230-0047 (JP); IWAI, Takashi, c/o Toyo Seikan Kaisha, Ltd., Yokohama-shi, Kanagawa 230-0001 (JP); SATO, Kazuhiro, c/o Toyo Seikan Group, Yokohama-shi, Kanagawa 240-0062 (JP)
(74) Representative: Vossius & Partner
(86) International application number: PCT/JP2003/011428
(87) International publication number: WO 2005/025855

(56) References cited:
- GB-A- 2 055 687
- JP-A- 2 501 644
- JP-A- 3 057 514
- JP-A- 7 195 618
- JP-A- 10 315 389
- JP-A- 2000 153 576
- JP-A- 2000 153 843
- JP-A- 2004 058 539
- DATABASE WPI Week 199539 Derwent Publications Ltd., London, GB; AN 1995-298856 XP002446643 & JP 07 195618 A (TOYO SEIKAN KK) 1 August 1995 (1995-08-01)
- DATABASE WPI Week 200038 Derwent Publications Ltd., London, GB; AN 2000-436253 XP002446644 & JP 2000 153843 A (HOKKAI CAN CO LTD) 6 June 2000 (2000-06-06)
- N.W. HAYES ET AL.: "Crystallisation of PET from the Amorphous State: Observation of Different Rates for Surface and Bulk Using XPS and FTIR" SURFACE AND INTERFACE ANALYSIS, vol. 24, no. 10, 1996, pages 723-728, XP002446877 Chichester (GB)
- M. DURELL ET AL.: "The role of surface-induced ordering in the crystallisation of PET films" EUROPHYSICS LETTERS, vol. 58, no. 6, 2002, pages 844-850, XP002446878 Les Ulis (FR)

## Description

The present invention relates to a resin-coated metal plate and drawn cans using these plates. More specifically, the invention relates to a resin-coated metal plate that has been laminated with specific layers of a resin film, and drawn cans using these resin-coated metal plates.

Conventionally, drawn cans (hereinafter "DR cans"), which have been processed by drawing metal plates such as tin-plated steel or aluminum plates have been widely used.

For these kinds of DR cans, a resin-film layer is formed on the inner surface side of the can in order to prevent degradation in flavor, a deterioration of the contents due to metal elusion from the metal plate, and the occurrence of pinholes and so forth.

The above-mentioned resin film is also required to have superior adherence so as to prevent peeling from the steel plate together with superior workability in conformity with draw-processing. Moreover, this resin film is required to have superior shock-resistance, in order to tolerate the shock of stamping, canning and transport.

In order to improve workability and adherence, the resin film should not have a very high degree of hardness. If the degree of hardness is too high, it will be low in workability and adherence, and it will be low in shock-resistance as well due to its brittleness.

On the other hand, although printing and varnishing are applied to the outer surface side of the can, at the inner surface side of the can where varnishing and printing have not been applied, scarring (wicket scars) can be caused at the holding of the plate of the can during a drying process in a baking oven and so forth after printing and varnishing.

Since these wicket scars become a starting point of corrosion during the filling of the contents, they give negative influences on the corrosion resistance of the can body, when these cans are formed using a resin-coated metal plate having wicket scars. In addition to becoming the starting point of corrosion, these wicket scars also affect the flavor of the contents in beverages and so forth (flavor degradation).

Wicket scarring in this kind of can bodies which degrades the corrosion resistance and flavor has a further problem that the softer the resin film is, the easier the wicket scarring occurs.

GB 2 055 687 A describes a polyester film-heat-bonded metal sheet comprising a biaxially oriented polyester film, heat-bonded to a metal sheet by means of an adhesive layer interposed therebetween. The adhesive layer is made of a blend comprised of, based on the weight of the blend, 5 to 80 wt. % of at least one polyester having a melting point of at least 200 °C and 20 to 95 wt. % of at least one polyester having a melting point of at least 100 °C, but not higher than a temperature which is 5 °C lower than the melting point of the high melting point polyester. The polyblend may contain a minor amount of a polyolefin resin.

JP 7195618 A discloses a resin coated metal panel consisting of a metal panel and the resin film provided on the single surface or both surfaces of the metal panel. The resin film consists of two layers of a crystalline saturated polyester resin layer derived from dicarboxylic acid consisting of 99-85 mol% of terephthalic acid and 1-15 mol% of isophthalic acid and a dihydroxy compound and a resin composition layer consisting of 75-99 wt. parts of a saturated polyester resin and 25-1 wt. parts of an ionomer resin and laminated to the metal panel so that the resin composition layer comes into contact with the metal panel.

The present invention is conducted focusing on the above-mentioned problems of the conventional arts and the object of the invention is to provide resin-coated metal plates that prevent wicket scars from occurring in the processes of varnishing, printing and drying. Furthermore, the object is to provide resin-coated metal plates that are laminated with resin-film layers which have characteristics such as superior workability, corrosion-resistance, adherence of resin, shock-resistance and so forth.

Moreover, it is also the object of the invention to provide drawn cans that use these resin-coated metal plates.

A resin-coated metal plate according to claim 1 comprises a metal plate, and a resin film that is applied to one surface side or to both sides of the metal plate, wherein this resin film comprises two layers of,
[A] a crystallized saturated polyester resin layer that is induced from dicarboxylic acid and dihydroxy compounds, the components of dicarboxylic acid being terephthalic acid and isophthalic acid, or only terephthalic acid, and
[B] a layer composed of resin that comprises (i) saturated polyester resin and (ii) ionomer resin,
the layer composed of resin [B] being laminated on the metal plate to contact with it, and wherein the crystallized saturated polyester resin layer [A] has a highly crystallized layer (X) having a degree of crystallization of 10-60 % at the surface thereof which is obtainable by heat treatment of the resin-coated metal plate.

A drawn can according to the present invention is formed by drawing or re-drawing of the resin-coated metal plate according to the present invention to have the highly crystallized layer (X) to reside on the inner surface side of the can.

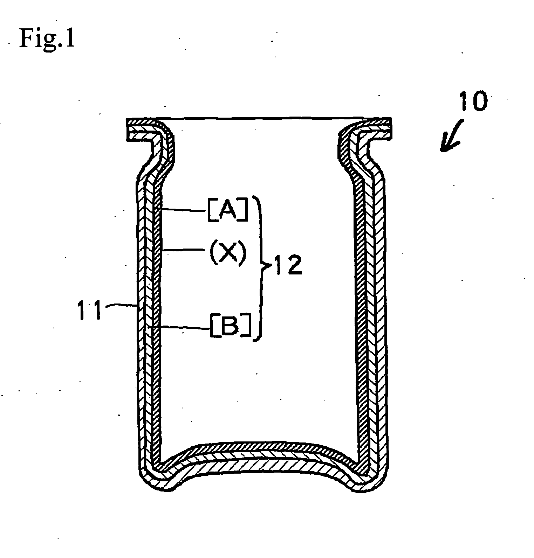

FIG.1 is a cross-section of a drawn can of the present invention.

The following is the explanation of the embodiment of the resin-coated metal plate and the drawn can using the plate of the present invention.

The resin-coated metal plate of the present invention comprises a metal plate and a resin film that is applied at least to the inner surface of the metal plate.

In the present invention, a metal plate conventionally known and generally used for producing cans is used. For example, a tin-plated steel plate (tin plate) wherein Sn (tin) is applied to the surface by a known method, a tin-free steel (TFS) plate, a steel plate with Ni plating, a steel plate with Zn plating or an aluminum plate and so forth are used.

It is preferable that this metal plate normally has a thickness of 0.01-0.5 mm, and more preferably a thickness of 0.1-0.2 mm.

At least on one surface, which is the inner surface of the can of this metal plate or on both surfaces of the metal plate, a two-layered resin film which comprises two layers of the crystallized saturated polyester resin layer [A] and the layer [B] composed of resin which comprises saturated polyester resin (i) and ionomer resin (ii) is formed.

The reason to have two layers of resin film is to have both characteristics of enough adherence to the metal plate and corrosion-resistance against the contents to be packaged inside of the can. That is, as the resin film contacted with the metal plate, the non-crystallized layer composed of resin [B] ensures adherence during processing cans, and as the resin film contacted with the contents, the crystallized saturated polyester resin layer [A] which has crystallization ensures corrosion-resistance against the contents of the can.

The crystallized saturated polyester resin layer [A] used in the present invention is composed of a constitutional unit that is induced from dicarboxylic acid and dihydroxy compound.

The compositions of the dicarboxylic acid to form the crystallized saturated polyester resin layer [A] are induced from specific two kinds or one kind of dicarboxylic acid. That is, the compositions of dicarboxylic acid are terephthalic acid and isophthalic acid, or only terephthalic acid.

Moreover, as the compositions of dihydroxy compounds to form the crystallized saturated polyester resin layer [A], for example, aliphatic dihydroxy compounds such as ethylene glycol, trimethylene glycol (propylene glycol), tetramethylene glycol, pentamethylene glycol, diethylene glycol, triethylene glycol and so forth are listed.

The above mentioned crystallized saturated polyester resin layer [A] may contain a small amount of a constitutional unit that is induced from polyfunctional compounds such as trimesic acid, pyromellitic acid, trimethylolethane, trimethylolpropane, trimethylolmethane, pentaerythritol and so forth as far as it does not deviate from the object of the invention.

As for the highly crystallized layer (X) at the surface of the crystallized saturated polyester resin layer [A], concretely, the degree of crystallization calculated by strength-ratio of 973 cm⁻¹ and 795 cm⁻¹ of IR spectrum obtained by the ATR method using 45° KRS-5 crystal, is 10-60 %, or preferably, 10-40 %. If the degree of crystallization is less than 10 %, it is difficult to have superior corrosion-resistance against the contents that have a high degree of corrosion. On the other hand, it is not very preferable to have a degree of crystallization over 60 %, since that decreases workability.

Further, although the thickness of the highly crystallized layer (X) formed at the surface is not limited in the present prevention, it is preferable that it is formed with at least 2 % of the thickness of the crystallized saturated polyester resin layer [A]. If the thickness is less than 2 %, it is difficult to have superior corrosion-resistance against the contents that have a high degree of corrosion.

In the present invention, saturated polyester resin (i) to be used to form a layer composed of resin [B] is composed of a constitutional unit that is induced from dicarboxylic acid and dihydroxy compounds.

As for the saturated polyester resin (i), the compositions of dicarboxylic acid comprise terephthalic acid or its ester derivative (for instance, lower alkyl ester, phenyl ester and so forth), the compositions of dihydroxy compounds comprise ethylene glycol or its ester plastic derivative (for instance, monocarboxylic acid ester ethylene oxide and so forth).

This saturated polyester resin (i) may contain a constitutional unit that is induced from other kinds of dicarboxylic acid and/or other kinds of dihydroxy compounds in the amount of equal to or less than 40 mol %. As an example of dicarboxylic acids except for terephthalic acid, aromatic dicarboxylic acids such as phthalic acid, isophthalic acid, naphthalene dicarboxylic acid, diphenyl dicarboxylic acid, and diphenoxyethane dicarboxylic acid; aliphatic dicarboxylic acid such as adipic acid, sebacic acid, azelaic acid, and decane dicarboxylic acid; alicyclic acid such as cyclohexane dicarboxylic acid, and so forth are listed. These dicarboxylic acids except for terephthalic acid may be used as its ester derivatives.

Furthermore, as an example of dihydroxy compounds except for ethylene glycol, fumaric glycol such as propylene glycol, tetramethylene glycol, neopentyl glycol, hexamethylene glycol, dodecamethylene glycol, diethylene glycol, triethylene glycol, tetraethylene glycol and polyethylene glycol; alicyclic glycol such as cyclohexane dimethanol; aromatic glycol such as varieties of bisphenol, hydroquinone, 2,2-bis (4-β -hydroxyethoxy phenyl) propane, and so forth are listed. These dihydroxy compounds may be used as its ester derivatives.

Moreover, saturated polyester (i) used in the present invention may contain a small amount of a constitutional unit, for instance, in the amount of equal to or less than 2 mol %, that is induced from polyfunctional compounds such as trimesic acid, pyromellitic acid, trimethylolethane, trimethylolpropane, trimethylolmethane, pentaerythritol and so forth.

In the present invention, as for ionomer resin (ii) to be used to form a layer composed of resin [B], the known ionomer resin that is an ionized salt wherein a part or whole of a carboxyl group in the copolymerization of ethylene and a, β-unsaturated carboxylic acid neutralized with metal positive ion is used.

As examples of this α,β-unsaturated carboxylic acid, unsaturated carboxylic acids with carbon number 3 - 8, such as acrylic acid, metacrylic acid, maleic acid, itaconic acid, anhydrous maleic acid, maleic acid monomethylester, and so forth are listed.

As examples of this metal positive ion that neutralizes the carboxyl group in the copolymerization of ethylene and unsaturated carboxylic acid, metal positive ions of 1-2 value, such as Na⁺, K⁺, Li⁺, Zn⁺, Zn⁺⁺, Mg⁺⁺, Ca⁺⁺, Co⁺⁺, Ni⁺⁺, Mn⁺⁺, Pb⁺⁺, Cu⁺⁺ and so forth are listed. Moreover, a part of the rest of the carboxyl group that has not been neutralized with metal positive ions may be esterized with lower alcohol.

As examples of this ionomer resin (ii), as mentioned above, ionomer resin wherein a part or whole of the carboxyl group in the copolymerization of ethylene and unsaturated carboxylic acids such as acrylic acid and metacrylic acid, or the copolymerization of ethylene and unsaturated carboxylic acids such as maleic acid and itaconic acid which has been neutralized with metal positive ions such as sodium, potassium, lithium, zinc, magnesium and calcium are listed.

In these examples, it is preferable that 30-70 % of the carboxyl group in the copolymerization ethylene and acrylic acid or metacrylic acid has been neutralized with metal such as Na. And also, it may be usable that the carboxyl group that has been neutralized with metal such as Na which is blended with the carboxyl group that has not been neutralized. As for this ionomer resin, products on the market may be used such as "Himilian (Surlyn of American DuPont company)" (name of product: produced by DuPont-Mitsui Polychemicals co., ltd.).

In the present invention, the resin film laminated on a metal plate comprises two layers of a crystallized saturated polyester resin layer [A] and a layer composed of resin [B] mentioned above, and the layer composed of resin [B] is laminated on the above-mentioned metal plate to contact with it. The thickness of the resin layers that have been laminated in this way, is usually 5-500 µm, a total of two layers, preferably 10-100 µm, and even more preferably 20-60 µm.

Moreover, as for the ratio of the thickness of two layers of the crystallized saturated polyester resin layer [A] and the layer composed of resin [B], layer [A]: layer [B] = 2:1 - 1:9 is preferable.

If layer [A] / layer [B] is greater than 2, it is not preferable because the shock-resistance might decrease. On the other hand, if layer [A] / layer [B] is less than 1/9, it is not preferable because it might become difficult to laminate the film on a metal plate with the same thickness of the layer continuously and the obtained cans might have pinholes.

The above-mentioned resin-coated metal plate in the present invention is, for instance, produced in one of the following methods (1)-(3).
(1) The crystallized saturated polyester resin layer [A] and the layer composed of resin [B], prepared as above mentioned, are extruded at the same time through a two-layer T-die to contact the resin layer [B] with a metal plate.
(2) At first, a film is formed from the crystallized saturated polyester resin layer [A] and the layer composed of resin [B] and this film is attached to the metal plate to have the layer composed of resin [B] contact the metal plate.
(3) On the metal plate the layer composed of resin [B] is formed and then the crystallized saturated polyester resin layer [A] is formed on the layer composed of resin [B].

As mentioned above, when a resin layer is coated on the metal plate, the resin film that is coated on the metal plate through an extruder in the condition of being melt is desired to be cooled down immediately. This resin film coated on the metal plate through an extruder in the condition of being melt is desired to be substantially unoriented and uncrystallized.

Although it is not usually necessary, when the resin layer is coated on the metal plate, an adhesive agent may be applied to between the metal plate and the layer composed of resin [B], and furthermore between the crystallized saturated polyester resin layer [A] and the layer composed of resin [B] to bond each other tightly, when it is necessary.

As for the adhesive agent, an adhesive agent that hardens with heat is preferable, for example, epoxy resin that contains a large amount of phenoxy resin as a main agent, polyester resin, urethane type resin, acryl resin and so on. As epoxy resin, denatured epoxy resin can be used such as polyester denatured epoxy resin, and as polyester resin, denatured polyester resin can be used as well.

The resins above can be used as the main agent itself or with other agents. Further, as preferable examples of the hardening agent used and blended with these main agents, anhydride, aminoplast, phenol resin, urethane type hardening agents and so forth, and at least one kind of them can be used.

As examples of the resin composition that hardens with heat using the main agents and hardening agents, a resin composition that contains epoxy resin and anhydride, or resin composition that contains phenol resin or polyester resin, and aminoplast or urethane type hardening agents are listed.

In the present invention, at the surface of the above-mentioned crystallized saturated polyester resin layer [A], a highly crystallized layer is formed. By forming a highly crystallized layer at the surface of the above-mentioned crystallized saturated polyester resin layer [A], the mechanic strength is increased at the surface in the crystallized saturated polyester resin layer [A]. That is why cans can prevent the occurrence of scarring on the resin-coated surface of the inner surface side of the can while they go through the processes in the varnishing and printing devise and the baking oven for drying.

The highly crystallized layer (X) is formed after the resin-coated metal plate is produced in either of the above-mentioned (1)-(3) methods by maintaining the resin-coated metal plate at a designated temperature for a designated time. That is, for instance, by cutting the resin-coated metal plate in a designated size, then applying printing on the resin-coated surface and maintaining it in the baking oven at a designated temperature for a designated time, the highly crystallized layer (X) is formed at the surface of the crystallized saturated polyester resin layer [A]. By conducting this heat treatment, as a result, the resin-coated metal plate can be obtained that has a high degree of mechanic strength at the surface and also has superior adherence to metal plates.

It is preferable that the temperature for the treatment to form the highly crystallized layer (X) is equal to or more than Tg + 30 °C and equal to or less than Tm - 10°C of the crystallized saturated polyester resin layer [A], more specifically, 150°C -200°C. If it is less than 150°C, it is difficult to obtain a highly crystallized layer (X) that has a degree of crystallization equal to or more than 10 % with a designated thickness, and if it is over 200°C, it is not preferable because there is a danger of the crystallized saturated polyester resin layer [A] being deteriorated by heat.

To form the highly crystallized layer (X), the preferable time for maintaining the resin-coated metal plate in the oven is 10 seconds to 30 minutes, more preferably, 1 minute to 30 minutes. If it is less than 10 seconds, the highly crystallized layer (X) that has a degree of crystallization of larger than 10 % cannot be obtained sufficiently, and if it is over 30 minutes, it is not preferable because there is a danger of the crystallized saturated polyester resin layer [A] to be deteriorated by heat.

As mentioned above, the resin-coated metal plate of the present invention comprises a metal plate, a crystallized saturated polyester resin layer [A] and a layer composed of resin [B] having the above mentioned ratio of thickness of the film, wherein the layer composed of resin [B] is laminated on the metal plate to contact with each other, and a highly crystallized layer (X) is formed at the surface of the crystallized saturated polyester resin layer [A].

Therefore, the resin-coated metal plate of the present invention has superior shock-resistance and superior workability, especially for drawing, and when it is formed, it is uniformly worked without causing pinholes in the film. Moreover, this resin film has superior adherence to the metal plate and superior workability followed by forming, thereby cans having a superior outside appearance can be obtained.

The drawn can 10 of the present invention is, as shown in FIG.1 of its cross section, formed by drawing or re-drawing the resin-coated metal plate 11. In this case when the resin-coated metal plate of which resin film 12 is applied to only one surface side of the metal plate 11 is used, it is drawn to have the surface of resin film as the inner surface side of the can.

Further, the resin film 12 is formed on the metal plate 11 by contacting a layer composed of resin [B], and as the upper layer of that a crystallized saturated polyester resin layer [A] to the metal plate 11. Moreover, a highly crystallized layer (X) is formed at the surface of the crystallized saturated polyester resin layer [A].

Furthermore, when drawn cans are formed from the above-mentioned resin-coated metal plate having the resin film on both surface sides of the plate, such drawn cans can be obtained that are coated with resin not only on the inner surface side of the can but also on the outer surface side of the can. They can omit the process of varnishing on the outer surface side of the can that is usually conducted after forming cans, and it is preferable because there is no problem of scattering solvents during varnishing and it can greatly reduce the equipment of producing cans.

As for methods of producing drawn cans (DR cans), various known methods can be adopted. That is, as the most general method, wherein punching resin-coated metal plates into a disk-shape, drawing them with a punch and a die, followed by trimming and flanging to form cylindrical cans with the bottom, further forming neck and bead portions and so forth on the wall and doming the bottom and so forth, are performed to obtain drawn cans.

### EXAMPLES

The invention will now be described by way of Examples and Comparative Examples, however, these examples are not intended to limit the scope of the present invention in any sense.

As shown in Table 1, crystallized saturated polyester resin [A] and resin compositions [B] that contain compositions as shown in Table 1, saturated polyester resin (i) and ionomer resin (ii) (name of product "Himilian (Surlyn of American DuPont company)" : produced by DuPont-Mitsui Polychemicals co., ltd.) were laminated on the one surface side of TFS (the thickness of the plate is 0.18 mm) by using two kinds of two-layer extrusion T-dies to have the ratio of thickness of film as shown in Table 1, have the layer [B] contacted with the TFS steel plate and have a thickness of film, a total of 25 µm. The TFS steel plate which was heated was used and within 10 seconds after coated with resin using a T-die, it was immediately cooled down at the temperature of less than 100°C. This resin-coated metal plate was cut in a designated length, and then cut in the size of 759 m X 871 mm. Printing was applied on the outer surface of the can and as shown in Table 2, it was heat-treated for 1-30 minutes in a baking oven at 150-200°C, and then a highly crystallized layer (X) was formed on the inner surface side of the can.

**Table 1**

| | saturated polyester resin of each layer | [B] ionomer resin *(4) | (X) degree of crystallization |
|---|---|---|---|
| Ex.1 | [A] isophthalic acid 5 mol %*(1) | 17 | 15% |
| | [B] isophthalic acid 16 mol %* (2) | | |
| Ex.2 | [A] isophthalic acid 5 mol % | 15 | 30% |
| | [B] isophthalic acid 7.7 mol % | | |
| Ex.3 | [A] terephthalic acid 100 mol % | 17 | 20% |
| | [B] isophthalic acid 6.9 mol % | | |
| Ex.4 | [A] isophthalic acid 10 mol % | 17 | 50% |
| | [B] isophthalic acid 10 mol % | | |
| Ex.5 | [A] isophthalic acid 10 mol % | 15 | 20% |
| | [B] isophthalic acid 7.7 mol% | | |
| Ex.6 | [A] isophthalic acid 10 mol % | 17 | 25% |
| | [B] isophthalic acid 6.9 mol % | | |
| Ex.7 | [A] isophthalic acid 10 mol % | 12 | 40% |
| | [B] CHDM*(3) 30 mol % | | |
| Ex.8 | [A] isophthalic acid 10 mol % | 15*(5) | 60% |
| | [B] isophthalic acid 10 mol % | | |
| Comp.Ex.1 | [A] isophthalic acid 5 mol %*(1) | 17 | 0% |
| | [B] isophthalic acid 16mol%*(2) | | |
| Comp.Ex.2 | [A] isophthalic acid 10 mol % | 12 | 5% |
| | [B] Chum*(3) 30 mol % | | |

| | | | |
|---|---|---|---|
| *(1) copolymerized polyester resin [A]: the composition of dicarboxylic acid is 100 mol %. The compositions of dicarboxylic acid except for isophthalic acid is terephthalic acid. *(2) copolymerized polyester resin (a): the composition of dicarboxylic acid is 100 mol %. The compositions of dicarboxylic acid expect for isophthalic acid is terephthalic acid. *(3) copolymerized polyester resin (a): the dihydroxy composition is 100 mol %. The dihydroxy compositions except for CHDM (cyclohexane dimethanol) is ethylene glycoL *(4) resin composition [B] : ionomer resin and saturated polyester resin is a total of 100 w/t part *(5) ionomer: Himilan1707 (Name of product: produced by Mitsui Dupon Polychemical Company) | | | |

**Table 2**

| | condition of oven (temperature×maintaining time) |
|---|---|
| Ex.1 | 190°C × 10min. |
| Ex.2 | 150°C × 30min. |
| Ex.3 | 200°C × 1min. |
| Ex.4 | 200°C × 10min. |
| Ex.5 | 180°C × 15min. |
| Ex.6 | 160°C × 25min. |
| Ex.7 | 170°C × 25min. |
| Ex.8 | 160°C × 20min. |
| Comp.Ex.1 | 100°C × 10min. |
| Comp.Ex.2 | 150°C × 5sec. |

The resin-coated metal plates obtained in this way were drawn to produce drawn cans, so as to have the resin-coated surface having a highly crystallized layer to be the inner surface side of the can. Moreover, at the other side of the edge portion a can lid that was laminated with polyethylene telephthalate on the inner surface side was fixed on by necking twice to obtain beverage cans.

The resin-coated metal plates were transferred through a baking oven and it was observed with eyes whether there are wicket scars on the metal plate or not. Furthermore, cans were produced and filled with contents by using the resin-coated metal plates of the Examples. After the cans were preserved for one month, they were observed with eyes about the flavor and the condition of corrosion on the inner surface side of the can (When they are corroded, whitened resin is found). The results are shown in Table 3.

**Table 3**

| | condition of highly crystallized layer [X] after going through oven | flavor of contents | corrosion resistance in inner surface of can |
|---|---|---|---|
| Ex.1 | without wicket scars | good | good |
| Ex.2 | without wicket scars | good | good |
| Ex.3 | without wicket scars | good | good |
| Ex.4 | without wicket scars | good | good |
| Ex.5 | without wicket scars | good | good |
| Ex.6 | without wicket scars | good | good |
| Ex.7 | without wicket scars | good | good |
| Ex.8 | without wicket scars | good | good |
| Comp.Ex.1 | with wicket scars | not good | not good |
| Comp.Ex.2 | with wicket scars | not good | not good |

As shown in the cases of Examples 1-8 of Table 3, the resin-coated metal plates of the present invention, no occurrence of wicket scars was found and the flavor of the contents and corrosion resistance were superior. On the other hand, in the cases of Comparative Examples 1 and 2, since occurrence of wicket scars were found, the flavor of the contents and corrosion resistance were deteriorated.

The resin-coated metal plates of the present invention prevent wicket scars from occurring, and there are few scars on the resin-coated surface, the inner surface side of the can, during processes of varnishing, printing and drying. They make it possible to produce superior drawn cans that have superior corrosion resistance, workability and so forth.

## Claims

1. A resin-coated metal plate, comprising a metal plate and a resin film applied to one surface side or to both sides of the metal plate, wherein the resin film comprises two layers of,
[A] a crystallized saturated polyester resin layer that is induced from dicarboxylic acid and dihydroxy compounds, the components of dicarboxylic acid being terephthalic acid and isophthalic acid, or only terephthalic acid, and
[B] a layer composed of resin comprising saturated polyester resin (i) and ionomer resin (ii),
the layer composed of resin [B] being laminated on the metal plate to contact with it, and wherein the crystallized saturated polyester resin layer [A] has a highly crystallized layer (X) having a degree of crystallization of 10-60% at the surface thereof which is obtainable by heat treatment of the resin-coated metal plate.

2. A can formed by drawing or re-drawing a resin-coated metal plate according to claim 1, wherein the highly crystallized layer (X) resides at the inner surface sideAT of the can.

## Patentansprüche

1. Mit Harz beschichtetes Metallblech, umfassend ein Metallblech und einen Harzfilm, der auf einer Oberflächenseite oder auf beiden Seiten des Metallblechs aufgebracht ist, wobei der Harzfilm zwei Schichten aus
[A] einer kristallisierten, gesättigten Polyesterharzschicht, die von Dicarbonsäure- und Dihydroxyverbindungen gebildet wird, wobei die Komponenten der Dicarbonsäure Terephthalsäure und Isophthalsäure oder nur Terephthalsäure sind, und
[B] einer Schicht, zusammengesetzt aus Harz, umfassend gesättigtes Polyesterharz (i) und Ionomerharz (ii),
umfasst, wobei die Schicht, die aus Harz [B] zusammengesetzt ist, auf das Metallblech laminiert ist, um sie mit ihm in Kontakt zu bringen, und wobei die kristallisierte gesättigte Polyesterharzschicht [A] eine in hohem Maße kristallisierte Schicht (X) mit einem Kristallisationsgrad von 10 bis 60% an ihrer Oberfläche aufweist, die durch Wärmebehandlung des mit Harz beschichteten Metallblechs erhältlich ist.

2. Dose, die durch Tiefziehen oder Ziehen im Nachzug eines mit Harz beschichteten Metallblechs gemäß Anspruch 1 erzeugt worden ist, wobei sich die in hohem Maße kristallisierte Schicht (X) an der inneren Oberflächenseite der Dose befindet.

## Revendications

1. Plaque métallique enduite de résine, comprenant une plaque métallique et un film de résine appliqué sur un côté ou sur les deux côtés de la surface de la plaque métallique, dans laquelle le film de résine comprend deux couches, à savoir
[A] une couche de résine polyester saturée cristallisée qui est induite par un acide dicarboxylique et des composés dihydroxy, les composants de l'acide dicarboxylique étant un acide téréphtalique et un acide isophtalique, ou uniquement un acide téréphtalique, et
[B] une couche composée d'une résine comprenant une résine polyester saturée (i) et une résine ionomère (ii),
la couche composée de la résine [B] étant laminée sur la plaque métallique en contact avec elle, et dans laquelle la couche de résine polyester saturée cristallisée [A] a une couche fortement cristallisée (X) présentant un degré de cristallisation de 10 à 60% sur sa surface, qui peut être obtenu par un traitement thermique de la plaque métallique enduite de résine.

2. Boîte formée par emboutissage ou par emboutissage de reprise d'une plaque métallique enduite de résine selon la revendication 1, dans laquelle la couche fortement cristallisée (X) se trouve sur le côté de surface intérieure de la boîte.
